(19) Europäisches Patentamt / European Patent Office / Office européen des brevets

(11) **EP 4 116 260 A1**

(12) **EUROPEAN PATENT APPLICATION**

(43) Date of publication:
**11.01.2023  Bulletin 2023/02**

(21) Application number: **21305943.9**

(22) Date of filing: **08.07.2021**

(51) International Patent Classification (IPC):
***C01F 11/18*** *(2006.01)*

(52) Cooperative Patent Classification (CPC):
**C01F 11/185;** C01P 2004/60; C01P 2004/61

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **IMERTECH SAS
75015 Paris (FR)**

(72) Inventors:
• **TAMBLYN, Richard
Clevedon BS21 7LS (GB)**

• **ROWE, Nigel
Cornwall PL26 8PY (GB)**
• **BOSTROM, Eric
Indal 85597 (SE)**
• **WARRICK, Joseph
Cornwall PL27 6AX (GB)**
• **CARLSSON, Marcus
Sundsvall 85752 (SE)**

(74) Representative: **Haseltine Lake Kempner LLP
One Portwall Square
Portwall Lane
Bristol BS1 6BH (GB)**

(54) **METHOD OF PREPARATION OF CALCIUM CARBONATE SLURRIES**

(57)     A method of preparing an aqueous slurry comprising calcium carbonate, the calcium carbonate obtained therefrom and uses thereof including in paper and paperboard.

EP 4 116 260 A1

**Description**

**TECHNICAL FIELD**

The present invention is directed to a method of preparing an aqueous slurry comprising calcium carbonate from a recovered calcium carbonate source. The present invention also relates to ground calcium carbonate obtainable or obtained from this method, uses thereof, including in filling or coating paper products.

**BACKGROUND TO THE INVENTION**

Inorganic materials, such as calcium carbonate, are used widely in a number of applications. For example, calcium carbonate is often used in the paper and paperboard industry, in paper filler and paper coating compositions. The calcium carbonate may be natural or synthetic. Natural calcium carbonate, such as chalk, marble or limestone, is obtained from geological mineral sources and is ground prior to its use in paper applications in order to achieve the desired degree of fineness and is commonly referred to as ground calcium carbonate (GCC). Synthetic calcium carbonate, on the other hand, may be made from a precipitation reaction and is commonly referred to as precipitated calcium carbonate (PCC). Generally, PCC is not ground after its formation.

For economic and environmental reasons, there is an increasing focus on recovering and reusing products or by-products obtained from existing processes. For example, in the Kraft pulping process, calcium carbonate with lower chemical purity than typical GCC or PCC is produced in large quantities as solid by-product. Given its lower quality and lower purity, the calcium carbonate by-product is not suitable for use in many applications and is instead often reserved for spreading on the land or in some cases, sent to landfill.

There remains a need to produce high-quality calcium carbonate from recovered sources that can be used in a broad range of applications. Such applications include as coatings and/or fillers in one or more of paper, paint, polymers, plastics and others. It is thus desirable to provide a method of preparing calcium carbonate from a recovered calcium carbonate source which is suitable for, *inter alia,* filling and coating applications for use in the aforesaid applications, particularly in the paper and paperboard industry.

The inventors of the present invention have surprisingly found that a recovered calcium carbonate source can be repurposed by treating to obtain a calcium carbonate material that can be used in any of the above-mentioned applications, without compromising product quality. This recovered calcium carbonate source can be a by-product of a process of producing pulp. Using a recovered calcium carbonate source, in particular a source from a process of producing pulp, not only offers better product life cycle in the industry, but a cheaper and more sustainable alternative to the typical natural and synthetic source materials used.

**SUMMARY OF THE INVENTION**

In accordance with a first aspect of the present invention, there is provided a method of preparing an aqueous slurry comprising calcium carbonate, the method comprising:

providing a recovered calcium carbonate;
dispersing the recovered calcium carbonate in water to form a slurry;
grinding the slurry of recovered calcium carbonate to obtain a ground calcium carbonate;
reducing the pH of the slurry of the ground calcium carbonate; and
screening the slurry of ground calcium carbonate.

In accordance with a second aspect of the present invention, there is provided an aqueous slurry comprising ground calcium carbonate obtainable from the method of the first aspect of the present invention.

In accordance with a third aspect of the present invention, there is provided a ground calcium carbonate obtainable or obtained from the method in accordance with the first aspect of the present invention.

In accordance with a fourth aspect of the present invention, there is provided a use of a ground calcium carbonate obtained or obtainable from the method of the first aspect of the present invention, for filling or coating paper.

In accordance with a fifth aspect of the present invention, there is provided a filler composition for paper, or a paper making composition, comprising a ground calcium carbonate, obtained or obtainable from the method of the first aspect of the present invention.

In accordance with a sixth aspect of the present invention, there is provided a paper product (e.g. paper), comprising (i) a ground calcium carbonate obtained or obtainable from the method of the first aspect of the present invention or (ii) a filler composition, (or paper making composition), in accordance with the fifth aspect of the present invention.

In accordance with a seventh aspect of the present invention, there is provided a paper coating composition comprising a ground calcium carbonate, obtained or obtainable from the method of the first aspect of the present invention.

In accordance with an eighth aspect of the present invention, there is provided a paper product (e.g. paper) coated with the paper coating composition of the seventh aspect of the present invention.

The recovered calcium carbonate may be a by-product of a process of producing pulp, for example, the Kraft pulping process.

The recovered calcium carbonate may have a pH of 10.0 to 13.5, for example, 10.5 to 12.2.

The recovered calcium carbonate may have 15 wt% or less of particles having a particle size of $2\mu m$ or less, or 10 wt% or less of particles having a particle size of $2\mu m$ or less and/or 30 wt% or greater of particles having a particle size of $10\mu m$ or greater, for example 55 wt% or greater of particles having a particle size of $10\mu m$ or greater.

The recovered calcium carbonate may have an ISO brightness of 35 to less than 96, or less than 90, or less than 85, or less than 80, or less than 70.

The recovered calcium carbonate may comprise contaminants from a process of producing pulp. The contaminants may comprise NaOH and/or lime.

Dispersing the calcium carbonate in the water to form an aqueous slurry may further comprise the use of or utilising a dispersant. The dispersant may comprise one or more of a polyacrylate, for example one or more of an ammonium polyacrylate, lithium polyacrylate, sodium polyacrylate, potassium polyacrylate, magnesium polyacrylate, or calcium polyacrylate. The dispersant may comprise or consist of a sodium polyacrylate.

The dispersant or dispersants may be added to the combination of the recovered calcium carbonate in water.

The dispersant, including any of the specific dispersants mentioned herein, may be at least 30% neutralised or at least 50% neutralised, or at least 55% neutralised. The dispersant may be at least 75% neutralised, preferably 100% neutralised.

The ground calcium carbonate may comprise at least 50 wt% of particles having a particle size of $2\mu m$ or less, or at least 55 wt% of particles having a particle size of $2\mu m$ or less.

The ground calcium carbonate may comprise less than 5 wt% of particles having a particle size of $10\mu m$ or greater, or less than 2 wt% of particles having a particle size of $10\mu m$ or greater.

The pH of the slurry after grinding may be about 11.0 to about 13.5, for example about 11.5 to about 13.5.

The pH reduction may reduce the pH of the slurry to 8.0 to 11.2, for example 9.0 to 11.2, or 9.5 to 11.2. The pH reduction may reduce the pH of the slurry to 10.0 or less than 10.0. The pH reduction may reduce the pH of the slurry to 9.4 to 9.9.

The pH of the ground calcium carbonate slurry may be reduced by a treatment comprising or consisting of one or more acids, e.g. a mixture of acids. The one or more acids may be in the form of a solution, e.g. an aqueous solution, or may be in the form of a gas.

The pH of the ground calcium carbonate slurry may be reduced by a treatment comprising or consisting of one or more of hydrochloric acid, nitric acid, phosphoric acid, sulfuric acid, or carbon dioxide. In certain embodiments, the treatment comprises phosphoric acid or carbon dioxide. In certain embodiments the treatment comprises or consists of carbon dioxide. The use of carbon dioxide is preferred for reducing the pH of the ground calcium carbonate slurry. The carbon dioxide may be used in the form of a gas or provided in the form of a solution, e.g. an aqueous solution.

The method may further comprise increasing the solids content of the ground calcium carbonate slurry. For example, the aqueous component or water may be reduced or removed from the slurry to increase the solids content of the ground calcium carbonate slurry.

The solids content of the ground calcium carbonate slurry may be between 30 wt% to 78 wt%, for example, 50 wt% to 78 wt%, for example 60 wt% to 78 wt%, for example 68 wt% to 78 wt% based on the total weight of the slurry.

The ground calcium carbonate slurry may have 50 wt% or greater of particles having a particle size of $2\mu m$ or less, and/or 2 wt% or less of particles having a particle size of $10\mu m$ or greater.

The screened ground calcium carbonate may have an ISO brightness of 65 or greater. For example, the screened ground calcium carbonate may have an ISO brightness of 70 or greater, an ISO brightness of 75 or greater, an ISO brightness of 80 or greater, an ISO brightness of 85 or greater, an ISO brightness of 90 and greater, or an ISO brightness of 95 or greater.

The method may further comprise mixing or blending the slurry with a further slurry, wherein the further slurry comprises an inorganic particulate material. The inorganic particulate material may comprise or consist of one or more of natural calcium carbonate, chalk, marble, kaolin, talc or precipitated calcium carbonate (PCC), any of which may have been ground. Mixing or blending with the further slurry may improve the functionality of the slurry, for example, by increasing the brightness. The mixing or blending with a further slurry may occur via the use of a static mixer and the relative proportions of components may be controlled by a brightness meter to control the average slurry brightness. The mixing or blending with a further slurry may occur after the pH of the slurry of the ground calcium carbonate has been reduced or after the ground calcium carbonate has been screened.

The method may further comprise drying the ground calcium carbonate slurry to obtain a final product comprising, or consisting of, or consisting essentially of ground calcium carbonate. The method may further comprise incorporating the final product comprising, or consisting of, or consisting essentially of ground calcium carbonate in a paper coating composition or as a filler in a paper product. A ground calcium carbonate is obtainable from the method. The method may further comprise incorporating the final product comprising, or consisting of, or consisting essentially of ground calcium carbonate in a paint or polymer composition.

In the method in accordance with the present invention, grinding of the slurry of recovered calcium carbonate takes place prior to reducing the pH of the slurry of the ground calcium carbonate by treatment. Optionally, in the method in accordance with the present invention further grinding does not take place after reducing the pH of the slurry of the ground calcium carbonate. Optionally, in the method in accordance with the present invention calcium carbonate is not precipitated during the method. Optionally, in the method in accordance with the present invention, calcium carbonate is not calcined, e.g. to form calcium oxide.

In the method in accordance with the present invention screening of the slurry of ground calcium carbonate may take place before and/or after the pH of the slurry of the ground calcium carbonate is reduced.

The method in accordance with the present invention advantageously provides one or more of the following when the resulting ground calcium carbonate is compared with the recovered calcium carbonate: increased brightness, reduced particle size or particle size distribution, reduced calcium hydroxide and/or calcium oxide content, reduced pH. The present inventors have also found that the calcium carbonate which is re-processed to produce a calcium carbonate pigment in accordance with the present invention can be used in filling or (pre)coating applications and that tailor-made filler and coating pigments produced in accordance with the present invention are easy to use in various applications including paper making applications (filling and coating) and contribute to excellent optics, mechanical properties and printability in the final product. The present invention is environmentally friendly and cost effective.

The skilled person will appreciate that, except where mutually exclusive, a feature described in relation to any one of the above aspects and/or embodiments may be applied *mutatis mutandis* to any other aspect and/or embodiment. Furthermore, except where mutually exclusive, any feature described herein may be applied to any aspect, and/or embodiment, and/or combined with any other feature described herein. The test methods used in connection with the present invention and applicable thereto may be found under the heading "Examples".

## DETAILED DESCRIPTION OF THE INVENTION

There is provided herein a method of preparing an aqueous slurry comprising calcium carbonate. It has surprisingly been found that a recovered calcium carbonate source can be repurposed by the present method to obtain a calcium carbonate material that can be used in various applications, such as paper filling and paper coating applications, without compromising product quality.

*Calcium carbonate source*

The method of the present invention comprises providing a recovered calcium carbonate. In this specification, the term "providing" encompasses utilising or using. The calcium carbonate source is a recovered calcium carbonate source. The calcium carbonate source may be a recovered calcium carbonate source from a process of producing pulp. The calcium carbonate source may be a by-product of a process of producing pulp.

The Kraft pulping process is a process for producing pulp. The process involves the removal of non-cellulosic material from the pulp, followed by washing, bleaching and drying. During the removal of non-cellulosic material from the pulp, lime mud is generated as a by-product from the recovery of NaOH in the process. Lime mud is a crude precipitated calcium carbonate source. When the process is in balance, the lime mud produced can be burnt to generate lime (CaO) for re-use in the process. However, when the process is not in balance, an excess of the lime mud by-product is produced and cannot be reused within the process. In such cases, the excess lime mud is sent on for spreading on the land or to landfill, or sent off-site for re-burning to form lime.

The calcium carbonate source for use in the present invention may be a recovered calcium source of the Kraft pulping process. The calcium carbonate source may be a by-product of the Kraft pulping process.

The recovered calcium carbonate may have about 15 wt% or less of particles having a particle size of $2\mu m$ or less. For example, the recovered calcium carbonate may have about 14 wt% or less of particles having a particle size of $2\mu m$ or less, the recovered calcium carbonate may have about 13 wt% or less of particles having a particle size of $2\mu m$ or less, the recovered calcium carbonate may have about 12 wt% or less of particles having a particle size of $2\mu m$ or less, the recovered calcium carbonate may have about 11 wt% or less of particles having a particle size of $2\mu m$ or less, the recovered calcium carbonate may have about 10 wt% or less of particles having a particle size of $2\mu m$ or less, the recovered calcium carbonate may have about 9 wt% or less of particles having a particle size of $2\mu m$ or less, about 8 wt% or less of particles having a particle size of $2\mu m$ or less, about 7 wt% or less of particles having a particle size of $2\mu m$ or less, about 6 wt% or less of particles having a particle size of $2\mu m$ or less, about 5 wt% or less of particles having a particle size of 2$\mu$m or less, about 4 wt% or less of particles having a particle size of 2$\mu$m or less, about 3 wt% or less of particles having a particle size of 2$\mu$m or less, about 2 wt% or less of particles having a particle size of 2$\mu$m or less, or about 1 wt% or less of particles having a particle size of 2$\mu$m or less.

The recovered calcium carbonate may have about 30 wt% or greater of particles having a particle size of 10$\mu$m or greater. For example, the recovered calcium carbonate may have about 35 wt% or greater of particles having a particle size of 10$\mu$m or greater, about 40 wt% or greater of particles having a particle size of 10$\mu$m or greater, about 45 wt% or greater of particles having a particle size of 10$\mu$m or greater, about 50 wt% or greater of particles having a particle size of 10$\mu$m or greater, or about 55 wt% or greater of particles having a particle size of 10$\mu$m or greater. The recovered calcium carbonate may have up to about 80 wt% or up to about 90 wt% of particles having a particle size of 10$\mu$m or greater.

The recovered calcium carbonate may have variable brightness. The recovered calcium carbonate may have an ISO brightness of about 35 to less than about 96, or less than about 90. For example, the calcium carbonate may have an ISO brightness of about 35 to about 85, an ISO brightness of about 35 to less than about 85, an ISO brightness of about 35 to less than about 80, an ISO brightness of about 35 to less than about 75 or an ISO brightness of about 35 to less than about 70. In all of the ranges given, the lower value of brightness may be about 60 or greater than 60. For example, the recovered calcium carbonate may have an ISO brightness of about 60 to about 85 or to less than about 85.

The recovered calcium carbonate may contain contaminants. The contaminants may come from a process of producing pulp, for example the Kraft process. The contaminants may comprise one or any combination of sodium hydroxide, lime, and metal ions, including heavy metal ions. The heavy metal ions may include, for example, barium and/or iron which are present as salts or compounds. Other heavy metals which may be present include one or more of cerium, cobalt, chromium, copper, manganese, strontium and zinc. Most of the metals will tend to be present in higher amounts in the recovered calcium carbonate when compared with natural sources of calcium carbonate such as chalk or marble. Metal salts and/or compounds which may be present may be reduced by washing the recovered calcium carbonate, for example with water. The contaminants may comprise sodium hydroxide and/or lime. In this specification, lime encompasses calcium oxide (CaO) and/or calcium hydroxide (Ca(OH)$_2$). Ca(OH)$_2$ may be referred to as slaked lime and it is typically produced by combining CaO (sometimes referred to as quicklime) with water.

The recovered calcium carbonate may have a pH of about 10.0 to about 13.5. For example, the recovered calcium carbonate may have a pH of about 10.1 to about 13.5, about 10.2 to about 13.5, about 10.3 to about 13.5, about 10.4 to about 13.5 or, about 10.5 to about 13.5. For example, the recovered calcium carbonate may have a pH of about 10.5 to about 13.0, about 10.5 to about 12.8, about 10.5 to about 12.5 or about 10.5 to about 12.2.

*Dispersing the calcium carbonate source*

The method of the present invention comprises dispersing the recovered calcium carbonate in water to form a slurry. The solids content of the calcium carbonate in water may be about 30 wt% to about 78 wt%, for example about 50 wt% to about 78 wt%, for example about 65 wt% to about 78 wt%, or about 68 wt% to about 78 wt%. The weight ratio of the calcium carbonate to water may be from about 30:70 to about 90:10, or about 40:60 to about 90:10, or about 50:50 to about 90:10, or about 60:40 to about 90:10, or about 70:30 to about 90:10, or about 75:25 to about 85:15.

*Dispersant*

The method of dispersing the recovered calcium carbonate may further comprise using a dispersant or dispersants. The dispersant may be a polyacrylate dispersant. The dispersant may comprise or consist of one or more of an ammonium polyacrylate, a lithium polyacrylate, a sodium polyacrylate, a potassium polyacrylate, a calcium polyacrylate, or a magnesium polyacrylate. The dispersant may comprise or consist of a sodium polyacrylate.

The dispersant may be neutralised. For example, the dispersant may be at least about 30 % neutralised, at least about 50 % neutralised, at least about 55 % neutralised, at least about 60 % neutralised, at least about 65 % neutralised, at least about 70 % neutralised, at least about 75 % neutralised, at least about 80 % neutralised, at least about 85 % neutralised, at least about 90 % neutralised, or at least about 95 % neutralised. Preferably, the dispersant may be 100% neutralised. For example, when sodium polyacrylate is fully neutralised all of the available free OH groups are associated with a sodium ion to form ⁻ONa+ groups. The dispersant may be expressed in terms of its activity. The activity represents the number or amount of free OH groups. The dispersant may be a blend or mixture of any of the dispersants referred to herein or may be a single dispersant. For example, the dispersant may consist of 100% neutralised sodium polyacrylate, or the dispersant may comprise more than one type of polyacrylate.

*Grinding the slurry*

The calcium carbonate slurry may be ground autogenously, i.e. by attrition between the particles of the solid material themselves. The calcium carbonate may be ground in the presence of a grinding medium comprising particles of different material from the calcium carbonate to be ground. Wherein the ground carbonate slurry is described herein as possessing certain particle size characteristics, this may be with respect to all of the particles in the slurry or it may be with respect to the calcium carbonate particles. For example, where it is described that the ground calcium carbonate slurry may comprise at least 50 wt% of particles having a particle size of $2\mu m$ or less, this may be taken to include any of the following: (i) all of the particles in the slurry may comprises at least 50 wt% of particles having a particle size of $2\mu m$ or less; or (ii) the calcium carbonate particles in the slurry may comprise at least 50 wt% of particles having a particle size of $2\mu m$ or less.

The method of the present invention comprises grinding the slurry of recovered calcium carbonate to obtain a ground calcium carbonate. The calcium carbonate is wet ground. Wet grinding of calcium carbonate involves the formation of an aqueous suspension of the calcium carbonate which may then be ground, optionally in the presence of a suitable dispersing agent. Reference may be made to, for example, EP-A-614948 (the contents of which are incorporated by reference herein in their entirety) for more information regarding the wet grinding of calcium carbonate.

The ground calcium carbonate slurry may comprise at least 50 wt% of particles having a particle size of $2\mu m$ or less. For example the ground calcium carbonate slurry may comprise at least 51 wt% of particles having a particle size of $2\mu m$ or less, at least 52 wt% of particles having a particle size of $2\mu m$ or less, at least 53 wt% of particles having a particle size of $2\mu m$ or less, at least 54 wt% of particles having a particle size of $2\mu m$ or less, or at least 55 wt% of particles having a particle size of $2\mu m$ or less, at least 56 wt% of particles having a particle size of $2\mu m$ or less, at least 57 wt% of particles having a particle size of $2\mu m$ or less, at least 58 wt% of particles having a particle size of $2\mu m$ or less, at least 59 wt% of particles having a particle size of $2\mu m$ or less, at least 60 wt% of particles having a particle size of $2\mu m$ or less, at least 61 wt% of particles having a particle size of $2\mu m$ or less, at least 62 wt% of particles having a particle size of $2\mu m$ or less, at least 63 wt% of particles having a particle size of $2\mu m$ or less, at least 64 wt% of particles having a particle size of $2\mu m$ or less, at least 65 wt% of particles having a particle size of $2\mu m$ or less, at least 66 wt% of particles having a particle size of $2\mu m$ or less, at least 67 wt% of particles having a particle size of $2\mu m$ or less, at least 68 wt% of particles having a particle size of $2\mu m$ or less, at least 69 wt% of particles having a particle size of $2\mu m$ or less, or at least 70 wt% of particles having a particle size of $2\mu m$ or less.

The ground calcium carbonate slurry may comprise less than 5 wt% of particles having a particle size of $10\mu m$ or greater. For example, the ground calcium carbonate may comprise less than 4.5 wt% of particles having a particle size of $10\mu m$ or greater, less than 4 wt% of particles having a particle size of $10\mu m$ or greater, less than 3.5 wt% of particles having a particle size of $10\mu m$ or greater, less than 3 wt% of particles having a particle size of $10\mu m$ or greater, less than 2.5 wt% of particles having a particle size of $10\mu m$ or greater, less than 2 wt% of particles having a particle size of $10\mu m$ or greater, less than 1.5 wt% of particles having a particle size of $10\mu m$ or greater, less than 1 wt% of particles having a particle size of $10\mu m$ or greater or less than 0.5 wt% of particles having a particle size of $10\mu m$ or greater.

After grinding, the ground calcium carbonate slurry may have a pH of 11.0 to 13.5 or 11.5 to 13.5. For example, the ground calcium carbonate slurry may have a pH of 11.6 to 13.5, a pH of 11.7 to 13.5, a pH of 11.7 to 13.5, a pH of 11.8 to 13.5, a pH of 11.9 to 13.5, a pH of 11.9 to 13.1, a pH of 11.9 to 13, a pH of 11.9 to 12.9, a pH of 11.9 to 12.8, a pH of 11.9 to 12.7, a pH of 11.9 to 12.6, a pH of 11.9 to 12.5, or a pH of 11.9 to 12.4. These measurements of pH may be taken during the grinding process. The pH measurement may be taken immediately after the completion of the grinding. Immediately after the completion of the grinding is taken to mean from 0 minutes up to 10 minutes after the grinding has been completed.

The grinding process may cause the pH of the slurry to increase. For example, the pH of the slurry may increase by at least 0.1 pH unit, increase by at least 0.2 pH unit, increase by at least 0.3 pH unit, increase by at least 0.4 pH unit, increase by at least 0.5 pH unit, increase by at least 0.6 pH unit, increase by at least 0.7 pH unit, increase by at least 0.8 pH unit, increase by at least 0.9 pH unit, increase by at least 1.0 pH unit, increase by at least 1.1 pH unit, increase by at least 1.2 pH unit, increase by at least 1.3 pH unit, increase by at least 1.4 pH unit, increase by at least 1.5 pH unit, increase by at least 1.6 pH unit, increase by at least 1.7 pH unit, increase by at least 1.8 pH unit, increase by at least 1.9 pH unit, or increase by at least 2.0 pH unit. The pH measurement may be taken immediately after the completion of the grinding. Immediately after the completion of the grinding is taken to mean from 0 minutes up to 10 minutes after the grinding has been completed.

The ground calcium carbonate slurry may have a pH 24 hours after grinding is completed of at least 0.1 to 1 pH unit more than the calcium carbonate slurry immediately after grinding is completed. Immediately after the completion of the grinding is taken to mean from 0 minutes up to 10 minutes after the grinding has been completed.

*Reducing the pH*

The pH of the ground calcium carbonate slurry may be reduced by a treatment with a treatment agent, for example by treatment with an acid or more than one acid, e.g. a mixture of acids. The treatment may comprise or consist of one or more of hydrochloric acid, nitric acid, phosphoric acid, sulfuric acid, or carbon dioxide. The treatment may comprise or consist of phosphoric acid or carbon dioxide. The treatment may comprise or consist of carbon dioxide.

Preferably, the treatment comprises or consists of carbon dioxide. The acid used in the treatment may be in the form of a solution, e.g. an aqueous solution. The acid used in the treatment may be in the form of a gas. The concentration of the acid may be from about 0.1M to about 2.0M, for example from about 0.5M to about 1.8M. These concentrations are applicable to any of the treatment agents or acids specifically mentioned.

The ground calcium carbonate slurry may be treated with about 0.5 kg/tonne to about 20 kg/tonne treatment agent (wherein a tonne is 1000 kg). For example, the ground calcium carbonate slurry may be treated with about 1 kg/t to about 20 kg/t, about 2 kg/t to about 20 kg/t, about 3 kg/t to about 20 kg/t, about 4 kg/t to about 20 kg/t, about 5 kg/t to about 20 kg/t, about 6 kg/t to about 20 kg/t, about 7 kg/t to about 20 kg/t, about 8 kg/t to about 20 kg/t, about 9 kg/t to about 20 kg/t, about 10 kg/t to about 20 kg/t, about 10 kg/t to about 18 kg/t, about 10 kg/t to about 16 kg/t, about 10 kg/t to about 14 kg/t, or about 10 kg/t to about 12 kg/t. For example, the ground calcium carbonate slurry may be treated with about 0.5 kg/t to about 5 kg/t, about 0.5 kg/t to about 4 kg/t, about 0.5 kg/t to about 3 kg/t, or about 1 kg/t to about 3 kg/t. These ranges are applicable to all of the treatment agents referred to herein. By way of example, a typical range for when carbon dioxide is used as the treatment agent is about 10 kg/t to about 12 kg/t. By way of example, a typical range for when phosphoric acid is used as the treatment agent is about 1 kg/t to about 3 kg/t, e.g. about 2 kg/t. Treatment amounts are based on the dry weight of the calcium carbonate.

The ground calcium carbonate slurry, immediately after treatment to reduce the pH, may have a pH of 8.0 to 11.2, for example 9.0 to 10.0. The ground calcium carbonate slurry, immediately after treatment to reduce the pH, may have a pH of less than 10.0, for example 8.0 or 9.0 to less than 10.0. A pH of less than 10.0 is preferred. The ground calcium carbonate slurry, immediately after treatment to reduce the pH, may have a pH of 8.1 to 11.2, a pH of 8.2 to 11.2, a pH of 8.3 to 11.2, a pH of 8.4 to 11.2, a pH of 8.5 to 11.2, a pH of 8.6 to 11.2, a pH of 8.7 to 11.2, a pH of 8.8 to 11.2, a pH of 8.9 to 11.2, a pH of 9.0 to 11.2, a pH of 9.1 to 11.2, a pH of 9.2 to 11.2, a pH of 9.3 to 11.2, a pH of 9.4 to 11.2, a pH of 9.5 to 11.2, a pH of 9.6 to 11.2, a pH of 9.7 to 11.2, a pH of 9.8 to 11.2, a pH of 9.9 to 11.2, a pH of 10.0 to 11.2, a pH of 10.1 to 11.2, a pH of 10.2 to 11.2, a pH of 10.3 to 11.2, a pH of 10.4 to 11.2, or a pH of 10.5 to 11.2. In all of the listed ranges, the upper limit of 11.2 may be replaced by 10.0 or less than 10.0. In all of the listed ranges, the lower limit of the pH range may be replaced by 9.4 or greater than 9.4. Preferably, the ground calcium carbonate slurry, immediately after treatment to reduce the pH, has a pH of 9.4 to 9.9. Immediately after treatment is taken to mean from 0 minutes up to 10 minutes after the treatment has been completed, for example after all of the acid has been added to the slurry.

After treatment to reduce the pH of the slurry of ground calcium carbonate, and when measured immediately after treatment, and compared with the pH prior to treatment to reduce the pH, the pH of the ground calcium carbonate slurry may decrease by at least 0.1 pH unit. For example, the pH of the ground calcium carbonate slurry may decrease by at least 0.2 pH unit, decrease by at least 0.3 pH unit, decrease by at least 0.4 pH unit, decrease by at least 0.5 pH unit, decrease by at least 0.6 pH unit, decrease by at least 0.7 pH unit, decrease by at least 0.8 pH unit, decrease by at least 0.9 pH unit, decrease by at least 1.0 pH unit, decrease by at least 1.1 pH unit, decrease by at least 1.2 pH unit, decrease by at least 1.3 pH unit, decrease by at least 1.4 pH unit, decrease by at least 1.5 pH unit, decrease by at least 1.6 pH unit, decrease by at least 1.7 pH unit, decrease by at least 1.8 pH unit, decrease by at least 1.9 pH unit, or decrease by at least 2.0 pH unit. The pH of the ground calcium carbonate slurry may decrease by at least 2.5 pH unit, by at least 3.0 pH unit, by at least 3.5 pH unit, or by at least 4 pH unit. Immediately after treatment is taken to mean from 0 minutes up to 10 minutes after the treatment has been completed.

The calcium carbonate slurry may have a pH 24 hours after treatment of at least 0.1 to 1 pH unit more than the calcium carbonate slurry immediately after treating. Immediately after treatment is taken to mean from 0 minutes up to 10 minutes after the treatment has been completed, for example after all of the acid has been added to the slurry.

*Screening slurry*

The treated ground calcium carbonate slurry may be screened. Screening removes at least some of the largest or larger calcium carbonate particles and/or (other) contaminants. Screening provides or results in a decrease in the particle size distribution of the calcium carbonate. As such, one or more of the d98, d90, d70, d50, d30, d10 of the ground calcium carbonate is reduced following screening of the ground calcium carbonate. The treated ground calcium carbonate slurry may be screened by conventional methods known in the art. For example, the treated ground calcium carbonate slurry may be screened by sieving, or by centrifugation. Sieving may take place using a sieve, screen, or mesh. The sieve, screen or mesh may consist of or comprise hole sizes from about 25 $\mu$m to about 250 $\mu$m. The sieve, screen or mesh may be a circular vibrating one. Screening by centrifugation may occur using a de-gritting (e.g. scroll) centrifuge. The centrifuge operates to remove particles based on size and density.

The screened ground calcium carbonate slurry may comprise at least 50 wt% or greater of particles having a particle size of 2$\mu$m or less. For example, the screened ground calcium carbonate slurry may comprise at least 51 wt% or greater of particles having a particle size of 2$\mu$m or less, at least 52 wt% or greater of particles having a particle size of 2$\mu$m or less, at least 53 wt% or greater of particles having a particle size of 2$\mu$m or less, at least 54 wt% or greater of particles having a particle size of $2\mu m$ or less, or at least 55 wt% or greater of particles having a particle size of $2\mu m$ or less, at least 56 wt% or greater of particles having a particle size of $2\mu m$ or less, at least 57 wt% or greater of particles having a particle size of $2\mu m$ or less, at least 58 wt% or greater of particles having a particle size of $2\mu m$ or less, at least 59 wt% or greater of particles having a particle size of $2\mu m$ or less, at least 60 wt% or greater of particles having a particle size of $2\mu m$ or less, at least 61 wt% or greater of particles having a particle size of $2\mu m$ or less, at least 62 wt% or greater of particles having a particle size of $2\mu m$ or less, at least 63 wt% or greater of particles having a particle size of $2\mu m$ or less, at least 64 wt% or greater of particles having a particle size of $2\mu m$ or less, at least 65 wt% or greater of particles having a particle size of $2\mu m$ or less, at least 66 wt% or greater of particles having a particle size of $2\mu m$ or less, at least 67 wt% or greater of particles having a particle size of $2\mu m$ or less, at least 68 wt% or greater of particles having a particle size of $2\mu m$ or less, at least 69 wt% or greater of particles having a particle size of $2\mu m$ or less, or at least 70 wt% or greater of particles having a particle size of $2\mu m$ or less.

The screened ground calcium carbonate slurry may comprise 2 wt% or less of particles having a particle size of $10\mu m$ or greater. For example, the screened calcium carbonate slurry may comprise 1.5 wt% or less of particles having a particle size of $10\mu m$ or greater, 1 wt% or less of particles having a particle size of $10\mu m$ or greater, or 0.5 wt% or less of particles having a particle size of $10\mu m$ or greater.

The screened ground calcium carbonate may have an ISO brightness of 65 or greater. For example, the screened ground calcium carbonate may have an ISO brightness of 70 or greater, an ISO brightness of 75 or greater, an ISO brightness of 80 or greater, an ISO brightness of 85 or greater, an ISO brightness of 90 and greater, or an ISO brightness of 95 or greater. The maximum ISO brightness may be up to 97, 98, 99, or 100.

*Additional method steps*

The method may further comprise increasing the solids content of the ground calcium carbonate slurry. The method in accordance with the present invention comprises the preparation of an aqueous slurry comprising calcium carbonate. As such the slurry may be described as having an aqueous component. The aqueous component may comprise, consist of, or consist essentially of water. The aqueous component (or water), may be removed from the slurry or reduced in volume to increase the solids content of the ground calcium carbonate slurry. The aqueous component (or water) may be removed or reduced by, for example, by gravity or by filtration by use or a tube press, by decanting, or by evaporation, by conventional evaporation means, such as, for example, a rotary or vacuum evaporator or by the application of heat.

The solids content of the slurry may be between about 30 wt% to about 85 wt%, about 35 wt% to about 85 wt%, about 40 wt% to about 85wt%, about 45 wt% to about 85 wt %, about 50 wt% to about 85%, about 50 wt% to about 80 wt%, about 30 wt% to about 78 wt%, about 50 wt% to about 78 wt%, about 65 wt% to about 78 wt%, or about 68 wt% to about 78 wt%.

The method may further comprise mixing or blending the slurry with a further slurry, wherein the further slurry comprises an inorganic particulate material. The inorganic particulate material may comprise or consist of one or more of calcium carbonate, e.g. naturally occurring calcium carbonate, chalk, marble, kaolin, talc or precipitated calcium carbonate (PCC). The inorganic material may or may not have been ground. The mixing or blending with a further slurry may occur via the use of a static mixer and the relative proportions of components may be controlled by a brightness meter to control the average slurry brightness. The further slurry may be mixed or blended after the pH of the slurry of the ground calcium carbonate is reduced and before and/or after the slurry of ground calcium carbonate is screened.

The method may further comprise drying the ground calcium carbonate slurry to obtain a final product comprising, or consisting of, or consisting essentially of (dry) ground calcium carbonate. The ground calcium carbonate may be dried using conventional means, e.g. by air drying and/or by the application of heat. The method may further comprise incorporating the final product comprising, or consisting of, or consisting essentially of ground calcium carbonate in a composition, for example a coating composition or a filling composition. The method may further comprise incorporating the final product comprising, or consisting of, or consisting essentially of ground calcium carbonate in a paper coating composition or as a filler in a paper product or paper making composition. The method may further comprise incorporating the final product comprising, or consisting of, or consisting essentially of ground calcium carbonate in a paint or polymer composition.

*Compositions*

The ground calcium carbonate obtained or obtainable from the present method may also be used in a variety of compositions. For example, the ground calcium carbonate obtained or obtainable from the present method may be suitable for use in materials such as coatings (e.g. paper coatings), adhesives, sealants, paper, glass, ceramics, polymers, rubber, plastics, paints and inks. For example, the ground calcium carbonate obtained or obtainable from the present method may be suitable as a filler or extender in these compositions.

*Filler compositions*

The ground calcium carbonate obtained or obtainable from the present method may be used in filling or filler compositions.

The filler compositions may be used in a substrate. The substrate may comprise pulp, thereby providing a papermaking composition and/or paper product (e.g. paper). As such, provided herein is a process for making a papermaking composition and/or paper product comprising combining and/or blending the ground calcium carbonate obtained from the method in accordance with the invention with a fibrous pulp suitable for making a paper product to form a papermaking composition, and optionally forming a paper product from the papermaking composition.

In this specification, the term paper should be understood to mean all forms of paper, including board, such as for example, white line board and linerboard, cardboard, paperboard, coated board, and the like. There are numerous types of paper, coated or uncoated, that may be made and/or coated with the compositions disclosed herein, including paper suitable for food packaging, perishable goods other than food, for example, pharmaceutical products and compositions, books, magazines, newspapers and the like and office papers. The paper may be calendered or super calendered as appropriate; for example, super calendered magazine paper for rotogravure and offset printing. Paper suitable for light weight coating (LWC), medium weight coating (MWC) or machine finished pigmentisation (MFP) may also be made and/or coated with the compositions disclosed herein.

The papermaking composition may comprise up to about 45 wt% inorganic particulate material, obtained or obtainable from the present method, based on the total dry contents of the papermaking composition. For example, the papermaking composition may comprise from about 1 wt% to about 45 wt% of inorganic particulate material, obtained or obtainable from the present method, based on the total dry contents of the papermaking composition. For example, the papermaking composition may comprise from about 5 wt% to about 45 wt%, for example from about 10 wt% to about 45 wt%, for example from about 20 wt% to about 45 wt%, for example from about 30 wt% to about 45 wt% of inorganic particulate material, obtained or obtainable from the present method, based on the total dry contents of the papermaking composition. For example, the papermaking composition may comprise from about 1 wt% to about 30 wt%, for example about 1 wt% to about 25 wt%, for example from about 1 wt% to about 20 wt%, for example from about 5 wt% to about 20 wt%, from about 5 wt% to about 15 wt%, for example from about 10 wt% to about 15 wt% of inorganic particulate material, obtained or obtainable from the present method, based on the total dry contents of the papermaking composition. Reference to inorganic particulate material may be taken to mean the amount of calcium carbonate obtained from the method in accordance with the invention and optionally when combined with further inorganic particulate material, such as provided by the further slurry referred to herein as comprising an inorganic particulate material, and wherein the inorganic particulate material from said further slurry may comprise or consist of one or more of calcium carbonate, e.g. naturally occurring calcium carbonate, chalk, marble, kaolin, talc or precipitated calcium carbonate (PCC), any of which may or may not have been ground.

The papermaking composition may also contain a retention aid, for example a non-ionic, cationic or anionic retention aid or a microparticle retention system, in an amount in the range from about 0.1 to 2% by weight, based on the dry weight of the papermaking composition. The papermaking composition may also contain a sizing agent which may be, for example, a long chain alkylketene dimer, a wax emulsion or a succinic acid derivative. The papermaking composition may also contain dye and/or an optical brightening agent. The papermaking composition may also comprise dry and wet strength aids such as, for example, starch or epichlorhydrin copolymers.

The method of making a filled paper composition may comprise combining and/or blending the ground calcium carbonate obtained or obtainable from the present method and a fibrous pulp suitable for making a paper product to form a papermaking composition, and forming a paper product from the papermaking composition.

The fibrous pulp may comprise cellulose. The fibrous pulp may be formed in a grinder vessel or homogenizer by addition of the fibrous substrate comprising cellulose in a dry state, for example, in the form of a dry paper broke or waste, directly to the grinder vessel. The aqueous environment of the grinder vessel or homogenizer will then facilitate the formation of a pulp. Grinding may suitably be performed in a conventional manner. The grinding may, for example, be an attrition grinding process in the presence of a particulate grinding medium, or may be an autogenous grinding process, i.e., one in the absence of a grinding medium. By grinding medium is meant a medium which is co-ground with the fibrous substrate.

In a typical papermaking process, a fibrous pulp is prepared by any suitable chemical or mechanical treatment, or combination thereof, which are well known in the art. In certain embodiments, the fibrous pulp comprises cellulose (i.e. the fibrous pulp is a cellulose-containing pulp). The cellulose-containing pulp may be derived from any suitable source such as wood, grasses (e.g., sugarcane, bamboo) or rags (e.g., textile waste, cotton, hemp or flax). The pulp may be bleached in accordance with processes which are well known to those skilled in the art and those processes suitable for use in the present invention will be readily evident. The bleached cellulose pulp may be beaten, refined, or both, to a predetermined freeness (reported in the art as Canadian standard freeness (CSF) in $cm^3$). A suitable paper stock may then be prepared from the bleached and beaten pulp.

The steps required for the formation of a paper product from a papermaking composition are conventional and well known in the art and generally comprise the formation of paper sheets having a targeted basis weight, depending on the type of paper being made.

In certain embodiments, the process for making a paper product further comprises coating and/or calendaring the paper. In certain embodiments, the process for making paper further comprises coating the paper product with a paper product coating composition. The paper product coating composition may comprise the calcium carbonate prepared in accordance with the method of the present invention.

*Coating compositions*

The ground calcium carbonate obtained or obtainable from the present method may be used in coating compositions, for example, pre-coating compositions. The coating compositions may be used on a substrate, for example paper or paperboard. The coating compositions may comprise the ground calcium carbonate obtained or obtainable from the present method and at least one binder. The at least one binder may be selected from binders known in the art. Examples of suitable binders include starch, latex, alcohol-based binders, proteinaceous adhesives, cellulose-based binders and combinations thereof. The binder(s) may also be combined with one or more other binders. The formula for the coating composition may depend upon the purpose for which the coated paper is to be used.

The coating composition may be an aqueous or non-aqueous slurry. The solids content of the coating composition may suitably be as high as possible whilst still giving a suitably fluid composition which may be used in coating a substrate. The solids content of the coating composition may be from about 10 wt% to about 90 wt%. For example, the coating composition may be from about 10 wt% to about 80 wt%, from about 10 wt% to about 70wt% or from about 10 wt% to about 65 wt%. After application of the aqueous coating composition to the substrate, the coating composition may be allowed to dry. Thus, the coating composition may be in the form of a dry residue comprising the ground calcium carbonate obtained or obtainable from the present method and at least one binder.

The coating composition may comprise from about 3 wt% to about 89 wt% of calcium carbonate obtained or obtainable from the present method, on a dry coating basis.

The coating composition may comprise from about 7 wt% to about 25 wt% of one or more binders based on addition to the total solids content of the inorganic particulate material of the coating composition. For example, the coating composition may comprise from about 8 wt% to about 20 wt%, for example from about 8 wt% to about 15 wt% of one or more binders based on addition to the total solids content of the inorganic particulate material of the coating composition. For example, the coating composition may comprise from about 9 wt% to about 25 wt%, for example from about 9 wt% to about 20 wt%, for example from about 9 wt% to about 15 wt% of one or more binders based on addition to the total solids content of the inorganic particulate material of the coating composition. For example, the coating composition may comprise from about 10 wt% to about 25 wt%, for example from about 10 wt% to about 20 wt%, for example from about 10 wt% to about 15 wt%, for example from about 13 wt% to about 15 wt% of one or more binders based on addition to the total solids content of the inorganic particulate material of the coating composition. Reference to inorganic particulate material may be taken to mean the amount of calcium carbonate obtained from the method in accordance with the present invention and optionally when combined with further inorganic particulate material, such as provided by the further slurry referred to herein as comprising an inorganic particulate material, and wherein the inorganic particulate material from said further slurry may comprise or consist of one or more of calcium carbonate, e.g. naturally occurring calcium carbonate, chalk, marble, kaolin, talc or precipitated calcium carbonate (PCC), any of which may or may not have been ground.

The coating compositions may, for example, comprise one or more optional additional components, if desired. Such additional components, where present, may suitably be selected from known additives for coating compositions (e.g. paper coating compositions). Some of these optional additives may provide more than one function in the coating composition. Examples of known classes of optional additives are as follows:

(a) one or more cross linkers;
(b) one or more water retention aids;
(c) one or more viscosity modifiers or thickeners;
(d) one or more lubricity or calendering aids;
(e) one or more dispersants;
(f) one or more antifoamers or defoamers;
(g) one or more optical brightening agents (OBA) or fluorescent whitening agents (FWA);
(h) one or more dyes;
(i) one or more biocides or spoilage control agents;
(j) one or more levelling or evening aids;
(k) one or more grease or oil resistance agents;

(l) one or more surfactants;
(m) one or more binders.

Any of the above additives and additive types may be used alone or in admixture with each other and with other additives, if desired.

For all of the above additives, the percentages by weight (based on the dry weight of inorganic particulate material (100%) present in the composition) can vary as understood by those skilled in the art. Where the additive is present in a minimum amount, the minimum amount may be about 0.01% by weight based on the dry weight of the inorganic particulate material. The maximum amount of any one or more of the above additives may, for example, be about 5.0% by weight based on the dry weight of the inorganic particulate material. For example, the maximum amount may be about 3.0% or 2.0% by weight based on the dry weight of the inorganic particulate material. Reference to inorganic particulate material may be taken to mean the amount of calcium carbonate obtained from the method in accordance with the invention and optionally when combined with further inorganic material, such as provided by the further slurry referred to herein as comprising an inorganic particulate material, and wherein the inorganic particulate material from said further slurry may comprise or consist of one or more of calcium carbonate, e.g. naturally occurring calcium carbonate, chalk, marble, kaolin, talc or precipitated calcium carbonate (PCC), any of which may or may not have been ground.

The method of making a coating composition as described herein may comprise combining the ground calcium carbonate obtained or obtainable from the present method and at least one binder. The method may comprise, for example, combining (e.g. mixing) the ground calcium carbonate obtained or obtainable from the present method and at least one binder and any other optional additives, in appropriate amounts in an aqueous or non-aqueous liquid to prepare a slurry of said components. The coating compositions may suitably be prepared by conventional mixing techniques, as will be known in the art. The ground calcium carbonate obtained or obtainable from the present method may be present as a slurry according to the first aspect of the invention. Other inorganic material may be present with the calcium carbonate obtained from the method in accordance with the invention, e.g. one or more of calcium carbonate, e.g. naturally occurring calcium carbonate, chalk, marble, kaolin, talc or precipitated calcium carbonate (PCC), any of which may or may not have been ground.

The paper may, for example, have first and second surfaces. The coating compositions described herein may, for example, be present on the first surface, the second surface or both. For example, the coating compositions may be present on the surface which faces the exterior of the paper product when it is formed into a three-dimensional product. The first and/or second surfaces may or may not have other intermediary coatings or layers between each surface and the coating composition described herein. The coating compositions may, for example, be applied directly to the paper substrate.

The paper product may have a single layer or more than one layer. For example, the paper product may have a pre-coat layer and/or a top-coat layer. The paper product may, for example, have a coat weight ranging from about 5 gsm (g per m$^2$) to about 20 gsm. For example, the paper product may have a coat weight ranging from about 5 gsm to about 15 gsm, for example from about 5 gsm to about 10 gsm. For example, the paper product may have a coat weight ranging from about 5 gsm to about 8 gsm. The coat weights referred to may be with respect to the pre-coat, or the top-coat, or the combination of pre-coat and top-coat.

## EXAMPLES

The invention will now be described, by way of example only and without limitation, with reference to the following Examples.

Test Methods and Samples

Unless otherwise specified, the test methods described below are applicable to the invention as described herein in its entirety and not just to the specific examples.

Dispersant A - sodium polyacrylate dispersant, 55 wt% neutralised.
Calcium carbonate B - calcium carbonate possessing a dso of 1.00 $\mu$m.
Calcium carbonate C - calcium carbonate possessing a $d_{50}$ of 1.65 $\mu$m and which is made into an aqueous slurry with water at 70 wt% solids content.
Grinding media - a mullite based ceramic, e.g. Carbolite ceramic media.

*pH measurement*

The pH of the aqueous slurry may be measured using any conventional pH meter. The pH of the aqueous slurry was measured using a Digital pH meter "Mettler Toledo FE20", which was calibrated in accordance with the manufacturer's instructions, using buffer solutions with normal values of 4, 7 and 9. This may be carried out using either a manual or automatic method, depending on the type of instrument used.

The pH of the aqueous slurry was measured by:

- mixing a sample of the aqueous slurry to ensure homogeneity, by using either a bench stirrer or rotating rollers, or by shaking the sample container and content vigorously;
- measuring the temperature of the sample and adjusting the temperature to 22 °C, either by cooling it in cold water or heating it in a water bath;
- removing the pH electrode from its deionised water storage solution and immersing it carefully into the test slurry;
- waiting until a stable pH reading was obtained;
- recording the pH value of the undisturbed slurry.

*Viscosity measurement*

The viscosity of the aqueous slurry refers to the Brookfield low shear viscosity.

The viscosity of the aqueous slurry was measured by:

- mixing a sample of the aqueous suspension to ensure that the slurry was homogeneous by using a bench stirrer or rotating rollers, or by shaking the container and contents vigorously;
- measuring the temperature of the slurry and adjusting it to 22 °C, either by cooling it in cold water or heating it in a water bath;
- removing the sample from the water bath when the correct temperature was reached, and mixing the contents for approximately 3 minutes using a high speed bench stirrer, for example Hamilton Beach Model 936-IS, supplied by Hamilton Beach Scovill Inc. (Hamilton Beach Division), Washington, North Carolina, 2789, USA;
- measuring viscosity by attaching a clean, dry number 3 spindle to a Brookfield RVT or Brookfield RVDE viscometer (supplied by Brookfield R.V. Viscometers: Brookfield Engineering Laboratories Inc., 240 Cushing Street, Stoughton, Massachusetts 02072, USA) and immersing it in the slurry to the groove. The spindle was centralised within the container containing the sample of aqueous slurry. The speed of the viscometer was set to 10 rotations per minute (r.p.m.) and switched on. The speed was increased to 100 r.p.m. and the spindle was allowed to rotate for 60 seconds ± 2 seconds. The viscometer reading was noted. The Brookfield RVT viscometer gives an analogue reading, whereas the Brookfield RVDE gives a digital reading.

If additional measurements of viscosity versus time are required, for example after 24 hours, the lid is refitted to the container holding the sample and is returned to the water bath for the required time (tx). The viscosity is then measured and recorded as described above, after that time interval (tx). The sample should not be stirred or agitated prior to tx measurement.

*Particle size measurements*

Unless otherwise stated, particle size properties referred to herein are as measured in a well-known manner by sedimentation of the particulate or material in a fully dispersed condition in an aqueous medium using a Sedigraph 5100 machine as supplied by Micromeritics Instruments Corporation, Norcross, Georgia, USA (telephone: +17706623620; web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (e.s.d.), less than given e.s.d. values. The mean particle size $d_{50}$ is the value determined in this way of the particle e.s.d at which there are 50% by weight of the particles which have an equivalent spherical diameter less than that $d_{50}$ value. The $d_{98}$, $d_{90}$ and the $d_{10}$ are the values determined in this way of the particle e.s.d. at which there are 98%, 90% and 10% respectively by weight of the particles which have an equivalent spherical diameter less than that $d_{98}$, $d_{90}$ or $d_{10}$ value. A suitable dispersant for calcium carbonate is sodium polyacrylate, for example a 55 wt% neutralised sodium polyacrylate. The sample for measurement is reduced in solids content to 2 wt%. The sample is sonicated prior to measurement with an ultrasonic probe at a 40 % amplitude (pulsed) setting for 1 minute +/- 10 seconds. A suitable processor model is Sonics & Materials VCX 500, probe model CV33.

*Weight solids (wt%) of a material in a slurry or suspension*

The weight solids (or solids content) was determined by dividing the weight of the solid material by the total weight of the aqueous slurry or suspension. The weight of the solid material was determined by weighing the solid material obtained by evaporating the aqueous phase of the suspension and drying the obtained material to a constant weight.

*Brightness measurement - (ISO)*

The ISO brightness is the percentage of light reflected by a body compared to that reflected by a perfectly reflecting diffuser measured at 457nm. A Datacolor Elrepho fitted with two tungsten lamps, a gloss shield and a range of filters which includes one at a nominal setting of 457nm and one at a nominal setting of 571nm was used.

A test surface is produced by pulverizing a dried material, for example using an Imerys pulveriser, to disperse it completely then compressing it under a pressure of 1.2kg $cm^{-2}$ to form a powder tablet. Drying is carried out in an oven and dryness of the sample is denoted by the absence of condensation on a piece of cool plate glass when placed in close proximity to the surface of the sample which has been removed from the oven. Suitable drying ovens include the forced circulation type which are capable of maintaining a temperature of 80°C to within 5°C. The reflectance values of this tablet are measured at two wavelengths in the visible spectrum. The measurements were made with the ultraviolet component excluded. The primary standard adopted was an ISO level 2 reflectance standard, supplied and calibrated by Physikalisch-Technische Bundesanstalt (P.T.B.) West Germany. A working standard, in this case a ceramic tile, was used to calibrate the photometer for brightness measurements which had been calibrated previously against the level 2 standard. Brightness may also be referred to as "VIO".

*Yellowness (YEL)*

The yellowness was measured according to the procedure described above for the brightness measurements. The yellowness is reported as the value obtained when the reflectance at 457nm is subtracted from the reflectance at 571nm.

*Opacity measurement* ISO 2741

Opacity was measured by means of an Elrepho Datacolor 3300 spectro-photometer using a wavelength appropriate to opacity measurement. The standard test method is ISO 2471. First a measurement of the percentage of the incident light reflected is made with a stack of at least ten sheets of paper over a black cavity ($R_{infinity}$). The stack of sheets is then replaced with a single sheet of paper, and a second measurement of the percentage reflectance of the single sheet on the black cover is made (R). The percentage opacity is then calculated from the formula: Percentage opacity = 100 x $R/R_{infinity}$.

*Other optical measurements*

Compositions may be assessed by colour with Hunter L* a* b* coordinates. For example, components "L," "a," and "b" are colour component values of a 3-dimensional colour space scale, which may be measured by, for example, a Hunter Ultrascan XE instrument. On the colour space scale, "L" is a measure of whiteness, "+a" is a measure of redness, "-a" is a measure of greenness, "+b" is a measure of yellowness, "-b" is a measure of blueness. Whiteness may be measured according to the ASTM-E-313 standard method.

*Burst Index measurement*

The Burst Index is determined using an L&W Bursting Strength tester based upon TAPI method T 403 om-91.

*Tensile Index measurement*

The tensile index measurement is the tensile strength (usually in N/m) divided by grammage. The tensile strength is the maximum tensile force developed in a test specimen before rupture on a tensile test carried to rupture under prescribed conditions. The measurements were made using a Testometrics tensile tester according to SCAN P16.

*Tear Index Measurement*

The tear index measurement (e.g. cross direction tear strength index) is measured in accordance with TAPPI method T 414 om-04 (Internal tearing resistance of paper (Elmendorf-type method)).

*Moisture measurement*

The level of moisture was measured using the Halogen moisture analyzer method.

Principle - The loss on drying of calcium carbonate at a temperature of 105 °C is determined with a Halogen moisture analyzer. At this temperature, loss on drying corresponds to water.

Equipment - Halogen desiccator coupled with a balance, precision 1 mg (Mettler HB43-S; hereinafter "Mettler HB").

- sample weight: around 10 g.
- drying program: pass directly from ambient temperature to final temperature without defined gradient (Standard for Mettler HB).
- drying temperature: 105 °C.
- switch-off criterion: the measure is finished when the weight decrease is lower than 1 mg in 90 s (Level 4 for Mettler HB).
- result: in moisture content percentage (% MC for Mettler HB).
- without corrective factor (Free factor = No for Mettler HB).

Procedure:

- open the drier;
- determine the tare weight (not useful in Auto mode for Mettler HB);
- place 10.0 ± 0.1 g of calcium carbonate in the (cleaned) sample pan and distribute it as homogenously as possible without packing down;
- shut the drier - press on "Start" (not useful in Auto mode for Mettler HB);
- notice the result (in percentage) on the digital display.

Results: given in g/kg with 1 decimal and converted to wt%.

*Preparation of handsheets*

The impact of the fillers on the properties of paper were investigated through handsheet trials.

Preparation of filler: The fillers were prepared by mixing the fillers with water to form a slurry, the percentage solids of which were measured using an IR balance before the slurries were diluted to 20 wt% solids.

Preparation of pulp: 400 dry grams of board was soaked for four hours in 10 L of filtered water. The soaked board was placed on the disintegrator for ten minutes, then diluted to 22 L with filtered water. The target refining was to achieve a Canadian standard Freeness (CSF) of 320. 500 mL of this thick stock was diluted to 2 L with microfiltered water and broken down in the Disintegrator II for a period of 600 counts to produce thin stock. 500 mL of thin stock was first dried over a vacuum before any remaining moisture was removed in the rapid dryer. The resulting pad was weighed and its percentage solids (S) calculated using equation 1:

$$S = m/s \qquad (1)$$

where m = the mass of the pad and s = the percentage solids of the thin stock.

The amount of microfiltered water needed to dilute the thin stock to 0.3 wt% solids was then calculated using equation 2:

$$V = (s-0.3)/3 \qquad (2)$$

where V = the volume to add to the thin stock.

1 L of the diluted thin stock was poured into the freeness tester and the run off water collected in a 1 L measuring cylinder. The volume of run off and the temperature of the thin stock were recorded and compared with standard table to calculate the CSF and confirm that the target was achieved. The thick stock was stored for up to a week. 5 L of thick stock was placed on the disintegrator for 10 minutes, then diluted to 20 L with microfiltered water. The percentage solids were calculated as above, and the thin stock diluted to 0.3 wt% solids.

First pass retention method: a Messmer Handsheet Former set to non-recirculation mode was used. A standard dose of 0.07 % thin stock weight of 0.5 % percol weight/volume solution was used. A retention of 80% was assumed and the amount of thin stock and filler needed for unfilled and 12 wt % filled sheets were calculated using equations 3-5.

$$W = Wt - [(Wt \times Ft)/100] \qquad (3)$$

$$Vt = (W \times 2) / 0.3 \qquad (4)$$

$$Vf = [\,[\,[(Ft \times Wt \times 0.02)/R]\,]100] / Fs \qquad (5)$$

where:

$W$ = gsm from pulp ($gm^{-2}$),
$Wt$ = target GSM ($gm^{-2}$),
$Ft$ = target filler loading (%),
$Vt$ = volume of thin stock required (mL),
$Vf$ = volume of filler (mL),
$T$ = target gsm ($gm^{-2}$),
$Fs$ = percentage solids of filler,
$R$ = retention (assumed or achieved) (%).

The components for one unfilled sheet were measured out using a 5 mL Eppendorf pipette and a 500 mL measuring cylinder, which was then inverted to ensure a homogenous mixture, before the sheets were made on the former. The water was drained from the system and fresh water used to repeat the process. One filled handsheet at 12 wt% loading of each different filler was made. The handsheets were then dried using the rapid dryer.

The handsheets were each burned at 950°C for twenty minutes, using the tunnel furnaces before the residue was weighed. The gsm was given by converting the weight of the sheet in $gm^{-2}$ and the filler content was calculated by giving the weight in grams of the filler ash as a percentage of the weight in grams of the handsheet. The achieved retention of each filler was calculated by expressing the filler ash weight as a percentage of the mass of filler originally added.

The amount of filler needed based on the achieved retention was calculated using equation 5. The process was repeated until a filler content within 1 % of the target and a retention between 70-100% was achieved. Sets of ten handsheets at 12 wt% loading were then made on the Messmer Former, with fresh water used for each sheet. The Messmer press was used to press the handsheets which were then dried at 160 °C using the rotary dryer.

Example 1

A number of recovered calcium carbonate samples were received in the form of cake material, and are referred to in Tables 1 and 2 as Samples 1-6.

## Table 1

| Sample | pH | Moisture wt% | WSS (wt%) |
|---|---|---|---|
| 1 | 11.4 | 18.5 | 0.138 |
| 2 | 11.5 | 16.8 | 0.095 |
| 3 | 11.6 | 18.1 | 0.103 |
| 4 | 12.1 | 24.0 | 0.328 |
| 5 | 11.6 | 28.4 | 0.223 |
| 6 | 11.4 | 15.9 | 0.143 |

WSS- water soluble salts

## Table 1 (continued)

| S | Chemical analysis (ppm) | | | | | | | | | | | | | |
|---|---|---|---|---|---|---|---|---|---|---|---|---|---|---|
| | Ca | Mg | Na | K | SO4- | Fe | Zn | Cu | PO4- | B | Al | SiO2 | Ba | Mn |
| 1 | 9.3 | 1.5 | 342.2 | 14.5 | 80.6 | <0.3 | <0.3 | <0.3 | 0.9 | 7.3 | 2.4 | 222.8 | <0.3 | <0.3 |
| 2 | 57.3 | 7.1 | 229.7 | 10.1 | 73.8 | <0.3 | <0.3 | <0.3 | 1.1 | 4.4 | 1.1 | 138.9 | 3.1 | <0.3 |
| 3 | 60.7 | 5.2 | 192.2 | 9.2 | 60.1 | <0.3 | <0.3 | <0.3 | <0.9 | 5.5 | 1.4 | 151.3 | 2 | <0.3 |
| 4 | 535.7 | 1.9 | 624.6 | 27 | 247 | <0.3 | <0.3 | <0.3 | <0.9 | 12.1 | 3.9 | 166.6 | 6.5 | <0.3 |
| 5 | 48.2 | 0.6 | 602.3 | 25.7 | 316 | <0.3 | <0.3 | <0.3 | <0.9 | 13.9 | 2.1 | 275.4 | 0.6 | <0.3 |
| 6 | 46.9 | 2.8 | 370.2 | 18.7 | 126.5 | <0.3 | <0.3 | <0.3 | <0.9 | 7 | 2.5 | 199.1 | 2 | <0.3 |

S- Sample

The samples were ground using a 1 litre capacity bench top grinder using 1 wt% of Dispersant A and 8/14 Carbolite ceramic grinding media. The starting solids were 68-69 wt% solids in water. Extra water was added to Sample 6 during grinding. The brightness and viscosity were measured on the 120 kWh/t ground sample. The viscosity results indicated that the amount of dispersant could be reduced. During grinding, the pH increased from about 11.5 to about 13-13.5. The psd, viscosity and brightness results are presented in Table 2.

### Table 2

| Sample | kWh/t (< 2 µm) / wt% | | | | Viscosity (mPas) | | | | |
|---|---|---|---|---|---|---|---|---|---|
| | 30 | 60 | 90 | 120 | Final solids (wt%) | T0h | T1h | T24h | pH |
| 1 | 27.2 | 41.6 | 52.9 | 61.7 | 71.8 | 90 | 115 | 130 | 13.4 |
| 2 | 29.2 | 41.1 | 53.9 | 61.6 | 73.4 | 110 | 145 | 165 | 13.3 |
| 3 | 26.9 | 41.5 | 52.3 | 60.1 | 73.4 | 105 | 140 | 150 | 13.3 |
| 4 | 38.0 | 51.4 | 61.6 | 70.3 | 72.8 | 95 | 120 | 150 | 13.5 |
| 5 | 36.4 | 49.6 | 59.9 | 67.8 | 73.5 | 125 | 230 | 430 | 13.2 |
| 6 | 26.4 | 40.9 | 55.1 | 60.5 | 72.2 | 90 | 125 | 150 | 13.3 |

### Table 2 (continued)

| Sample | kWh/t (< 2 µm) | | | | Brightness (120 kWh/t sample) | | | | |
|---|---|---|---|---|---|---|---|---|---|
| | 30 | 60 | 90 | 120 | Vio | Yel | L* | A* | B* |
| 1 | 27.2 | 41.6 | 52.9 | 61.7 | 93.8 | 1.1 | 97.9 | -0.11 | 0.72 |
| 2 | 29.2 | 41.1 | 53.9 | 61.6 | 92.8 | 1.0 | 97.5 | -0.09 | 0.63 |
| 3 | 26.9 | 41.5 | 52.3 | 60.1 | 93.3 | 1.2 | 97.8 | -0.07 | 0.77 |
| 4 | 38.0 | 51.4 | 61.6 | 70.3 | 92.3 | 1.5 | 97.4 | -0.23 | 0.94 |
| 5 | 36.4 | 49.6 | 59.9 | 67.8 | 92.1 | 1.5 | 97.4 | -0.26 | 0.95 |
| 6 | 26.4 | 40.9 | 55.1 | 60.5 | 93.4 | 1.6 | 97.9 | -0.04 | 1.03 |

### Example 2

0.75 kg of recovered calcium carbonate, in the form of a cake and 72 wt% solids in water, obtained from the Kraft pulping process was added to a 1 L vessel, equipped with a vertical agitator. To this, Dispersant A was added, to obtain a dose at 0.5 % active (i.e. the amount of dispersant present was 0.5 wt% based on the total weight of dry calcium carbonate). The mixture was stirred at a speed of 1500 rpm to disperse the recovered calcium carbonate material and form an aqueous slurry. After this, the recovered calcium carbonate aqueous slurry was wet ground in a mill using 750 g Carbolite ceramic media, to a total specific grinding energy of 110 kWh/t. The ground calcium carbonate slurry was then treated with $CO_2$ (g), in an amount of 10 kg/tonne or phosphoric acid in an amount of 1 kg/tonne. After this, the ground calcium carbonate slurry was screened using a 25 µm screen.

The data in Table 3 shows the properties of the calcium carbonate at different stages of the process. Material prior to treatment (i.e. as recovered from the Kraft pulping process), post-grinding and post-pH adjustment with either carbon dioxide or phosphoric acid.

### Table 3

| | Prior to treatment | Post-grinding | pH adjusted | |
|---|---|---|---|---|
| | | | $CO_2$ | Phosphoric acid |
| Solids (wt %) | 86.1 | 70.6 | 71.4 | 69.9 |

(continued)

|  | Prior to treatment | Post-grinding | pH adjusted | |
|---|---|---|---|---|
|  |  |  | CO$_2$ | Phosphoric acid |
| pH, after 0 hr | 12.0 | 12.0 | 10.1 | 10.7 |
| pH, after 24 hr |  | 11.9 | 10.5 | 11.4 |
| Viscosity, 0 hr (mPas) |  | 525 | 69 | 74 |
| Viscosity, after 24 hr (mPas) |  | 533 | 158 | 210 |

While both treatment agents, i.e. $CO_2$ and phosphoric acid, lower the pH of the ground slurry, the data shows that treating the slurry with $CO_2$ offers additional pH and viscosity stabilisation over treating with phosphoric acid, with the pH and viscosity data after 24 hr having less variability than the equivalent phosphoric acid data.

**Example 3**

Recovered calcium carbonates from a different source were prepared and treated in accordance with Example 2. The pH reduction was achieved using $CO_2$.

Table 3a shows the difference in properties between two different recovered calcium carbonates (Samples 7 and 8) before and after they have been treated in accordance with the present invention (i.e. after treatment). Both samples were prepared from by-products of the Kraft process. Sample 7 was prepared from an older lower brightness recovered by-product, whereas Sample 8 was prepared fresh from a by-product off a production line run within a few days of being formed.

**Table 3a**

|  | Before treatment (Sample 7) | Before treatment (Sample 8) | After treatment (Sample 7) | After treatment (Sample 8) |
|---|---|---|---|---|
| Particle size >10 $\mu$m (wt %) |  | > 55 | <1 | <1 |
| Particle size $\leq$2 $\mu$m (wt%) |  | 10 | 64 | 65 |
| ISO Brightness (VIO) |  | 67.3 | 64.7 | 82.6 |
| pH |  | 12.2 | 9.1 | 8.9 |
| Ca(OH)$_2$ (wt%) |  | 11.2 | 0.6 | 0.7 |
| Solids (wt%) |  |  | 65 | 65 |

Sample 7 (after treatment) was blended in fixed ratios based on the dry weight of calcium carbonate with calcium carbonate B. For example, at 50% (by weight) recovered material, 500 g of dry weight equivalent slurry was mixed in a standard laboratory mixer with 500 g of dry weight equivalent marble based slurry (calcium carbonate B) for a minimum of 15 minutes. The resulting slurry was then sampled to measure optical properties as detailed previously.

In Table 3b, the brightness and opacity of hand sheets of paper are measured as progressively larger amounts of Sample 7 or Sample 8 are added. Samples 7' and 7" are blends of Sample 7 and calcium carbonate B at different weight ratios.

The handsheets were prepared in accordance with the procedure outlined above.

**Table 3b**

| Sample | Loading level of Sample in handsheet/wt% | Brightness | Opacity |
|---|---|---|---|
| 7 | 0* | 86 | 77.5 |
| | 8.1 | 73.9 | 92.8 |
| | 11.8 | 71.8 | 95 |
| | 17.8 | 69.2 | 97.1 |
| | 24.2 | 67.5 | 98.2 |
| 8 | 0 | 86 | 77.5 |
| | 8 | 84.7 | 85.8 |
| | 12 | 84.6 | 89 |
| | 17.5 | 84.3 | 91.1 |
| | 23.9 | 84 | 93.1 |
| 7' (blend) | 0 | 86 | 77 |
| | 7.2 | 79.9 | 88 |
| | 10 | 78.1 | 90.6 |
| | 14.9 | 77.4 | 92.8 |
| | 18.3 | 76.1 | 94.9 |
| 7" (blend) | 0 | 86 | 77.5 |
| | 8.1 | 84.5 | 86 |
| | 12.1 | 83.6 | 89.1 |
| | 17.7 | 82.6 | 91.2 |
| | 24.1 | 82 | 93.2 |
| * 0 wt% indicates the paper which is measured for brightness and opacity contains 0 wt% of the calcium carbonate fillers which were tested. | | | |

In "Sample 7' (blend)" a blend of Sample 7 was combined with calcium carbonate B in the ratio of 40:60 (wt%). In "Sample 7" (blend)" a blend of Sample 7 was combined with calcium carbonate B in the ratio of 20:80 (wt%). These blends were then added in increasing amounts to the handsheets and in accordance with Table 3b.

## Example 4

Example 4 relates to the use of a ground calcium carbonate prepared in accordance with the invention and its use as a filler in paper. It is compared with calcium carbonate C which is a commercially available ground calcium carbonate, from Imerys.

The sample of ground calcium carbonate was made in accordance with the procedure in Example 2 at 100 kWh/t.

The particle size distribution (psd), particle size, steepness and optical properties of the ground calcium carbonate made in accordance with the invention and commercially available calcium carbonate C are compared in Table 4.

**Table 4**

| | | Calcium carbonate after grinding and pH treatment with $CO_2$ | Calcium carbonate C |
|---|---|---|---|
| Psd (less than in $\mu$m, sedigraph) | 2 | 60 | 58 |
| | 1 | 30 | 27 |
| | 0.75 | 22 | 19 |

(continued)

| | | Calcium carbonate after grinding and pH treatment with $CO_2$ | Calcium carbonate C |
|---|---|---|---|
| | 0.5 | 14 | 11 |
| | 0.25 | 7 | 6 |
| Diameters | d30 | 1.0 | 1.1 |
| | d50 | 1.6 | 1.7 |
| | d70 | 2.5 | 2.5 |
| | Steepness (d30/d70 x 100) | 40 | 44 |
| Brightness | ISO | 92.3 | 86.0 |
| | Yellow | 1.9 | 4.6 |
| | DIN Yellow | 2.1 | 5.8 |
| | Whiteness | 88.7 | 76.4 |
| | L* | 97.6 | 95.9 |
| | A* | -0.07 | 0.21 |
| | B* | 1.15 | 2.99 |
| Psd - particle size distribution | | | |

*Loading the samples into paper (preparation of handsheets)*

The samples were loaded into paper at 12 wt% in accordance with the procedure to form filled paper samples set out above.

A number of tests were conducted on the resulting filled papers plus an unfilled paper for the purposes of comparison. The results are presented in Table 5.

Paper 1- paper filled with the ground calcium carbonate made in accordance with Example 4.

Comparative paper 1- paper filled with the commercially available ground calcium carbonate C.

Comparative paper 2- unfilled paper.

**Table 5**

| | Paper 1 | Comparative Paper 1 | Comparative Paper 2 |
|---|---|---|---|
| Brightness | 78.2 | 77.8 | 75.4 |
| Opacity at 52 gsm | 86.1 | 86 | 81.6 |
| Burst Index (N.m.g$^{-1}$) | 12.7 | 12.4 | 18.9 |
| Tensile Index (KN/m/gsm) | 0.023 | 0.023 | 0.033 |
| Tear Index (mN/gsm) | 3.71 | 3.57 | 4.48 |

Unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. The word "may" in the specification indicates the feature is optional and may be replaced by the word "can".

For the avoidance of doubt, the present application is directed to the subject-matter described in the following numbered paragraphs:

1. A method of preparing an aqueous slurry comprising calcium carbonate, the method comprising:

providing a recovered calcium carbonate;
dispersing the recovered calcium carbonate in water to form a slurry;
grinding the slurry of recovered calcium carbonate to obtain a ground calcium carbonate;
reducing the pH of the slurry of the ground calcium carbonate;
screening the slurry of ground calcium carbonate.

2. The method according to numbered paragraph 1, wherein the recovered calcium carbonate is a by-product of a process of producing pulp, for example, the Kraft pulping process.

3. The method according to numbered paragraph 1 or numbered paragraph 2, wherein the recovered calcium carbonate has a pH of 10.0 to 13.5, for example, 10.5 to 12.2.

4. The method according to any one of numbered paragraphs 1 to 3, wherein the recovered calcium carbonate has 15 wt% or less of particles having a particle size of $2\mu$m or less, or 10 wt% or less of particles having a particle size of $2\mu$m or less and/or 30 wt% or greater of particles having a particle size of $10\mu$m or greater, for example 55 wt% or greater of particles having a particle size of $10\mu$m or greater.

5. The method according to any one of numbered paragraphs 1 to 4 wherein the recovered calcium carbonate has an ISO brightness of 35 to less than 96, or less than 90, or less than 80, or less than 70.

6. The method according to any one of numbered paragraphs 1 to 5, wherein the recovered calcium carbonate comprises contaminants from a process of producing pulp.

7. The method according to numbered paragraph 6, wherein the contaminants comprise NaOH and/or lime and/or metal ions (e.g. barium and/or iron salts or compounds).

8. The method according to any one of numbered paragraphs 1 to 7, wherein dispersing the slurry further comprises utilising a dispersant.

9. The method according to numbered paragraph 8, wherein the dispersant comprises one or more of a polyacrylate, for example one or more of an ammonium polyacrylate, lithium polyacrylate, sodium polyacrylate, magnesium polyacrylate, calcium polyacrylate, or potassium polyacrylate.

10. The method according to numbered paragraph 9, wherein the dispersant is at least 30% neutralised, or at least 50% neutralised.

11. The method according to numbered paragraph 9, wherein the dispersant is at least 55% neutralised, or is at least 75% neutralised, preferably 100% neutralised.

12. The method according to any one of numbered paragraphs 8 to 11, wherein the dispersant comprises or consists of a sodium polyacrylate.

13. The method according to any one of numbered paragraphs 1 to 12, wherein the ground calcium carbonate slurry comprises at least 50 wt% of particles having a particle size of $2\mu$m or less, or at least 55 wt% of particles having a particle size of $2\mu$m or less.

14. The method according to any one of numbered paragraphs 1 to 13 wherein the ground calcium carbonate slurry comprises less than 5 wt% of particles having a particle size of $10\mu$m or greater, or less than 2 wt% of particles having a particle size of $10\mu$m or greater.

15. The method according to any one of numbered paragraphs 1 to 14, wherein the pH of the slurry after grinding is 11.0 to 13.5, for example 11.5 to 13.5.

16. The method according to any one of numbered paragraphs 1 to 15, wherein the pH reduction reduces the pH of the slurry to 8.0 to 11.2, for example 9.0 to 11.2, or 9.5 to 11.2, or 9.4 to 9.9.

17. The method according to any one of numbered paragraphs 1 to 16, wherein the pH of the ground calcium carbonate slurry is reduced by a treatment comprising or consisting of one or more acids, e.g. one or more of hydrochloric acid, nitric acid, phosphoric acid, sulfuric acid, or carbon dioxide.

18. The method according to numbered paragraph 17, wherein the treatment comprises or consists of phosphoric acid or carbon dioxide.

19. The method according to numbered paragraph 17, wherein the treatment comprises or consists of carbon dioxide.

20. The method according to any one of numbered paragraphs 1 to 19, wherein the screening comprises or consists of sieving or centrifugation.

21. The method according to any one of numbered paragraphs 1 to 20, further comprising:
increasing the solids content of the ground calcium carbonate slurry.

22. The method according to numbered paragraph 21, wherein the water is removed from the slurry to increase the solids content of the ground calcium carbonate slurry.

23. The method according to any one of numbered paragraphs 1 to 22, wherein the solids content of the ground calcium carbonate slurry is between 30 wt% to 78 wt%, for example, 50 wt% to 78 wt%, or 60 wt% to 78 wt%, or 68 wt% to 78 wt%.

24. The method according to any one of numbered paragraphs 1 to 23, wherein the ground calcium carbonate slurry has 50 wt% or greater of particles having a particle size of $2\mu m$ or less and/or 2 wt% or less of particles having a particle size of $10\mu m$ or greater.

25. The method according to any one of numbered paragraphs 1 to 24, wherein the screened ground calcium carbonate has an ISO brightness of 65 or greater, for example 70 or greater, for example 75 or greater, for example 80 or greater, for example 85 or greater, for example 90 or greater, for example 95 or greater.

26. The method according to any one of numbered paragraphs 1 to 25, further comprising:
mixing or blending the slurry with a further slurry, wherein the further slurry comprises an inorganic particulate material.

27. The method according to numbered paragraph 26, wherein the inorganic particulate material comprises or consists of one or more of (natural) ground calcium carbonate (GCC), chalk, marble, kaolin, talc or precipitated calcium carbonate (PCC).

28. The method according to numbered paragraph 26 or 27, wherein mixing or blending with the further slurry improves the functionality of the slurry, for example, by increasing the brightness.

29. The method according to any one of numbered paragraphs 26 to 28, wherein the mixing or blending with a further slurry occurs via the use of a brightness meter to control the average slurry brightness.

30. The method according to any one of numbered paragraphs 1 to 29, further comprising:
drying the ground calcium carbonate slurry to obtain a final product comprising, or consisting of, or consisting essentially of ground calcium carbonate.

31. The method according to numbered paragraph 30, further comprising incorporating the final product comprising, or consisting of, or consisting essentially of ground calcium carbonate in a paper coating composition or as a filler in a paper making composition or a paper product.

32. An aqueous slurry comprising ground calcium carbonate obtainable from the method according to any one of numbered paragraphs 1 to 29.

33. Ground calcium carbonate obtainable from the method according to any one of numbered paragraphs 1 to 30.

34. Use of a ground calcium carbonate obtained or obtainable from the method according to any one of numbered paragraphs 1 to 30, for filling or coating paper.

35. A filler composition for paper, or a paper product, or for a paper making composition comprising a ground calcium carbonate, obtained or obtainable from the method according to any one of numbered paragraphs 1 to 30.

36. Paper or a paper product, comprising (i) a ground calcium carbonate obtained or obtainable from the method according to any one of numbered paragraphs 1 to 30 or (ii) a filler composition according to numbered paragraph 35.

37. A paper coating composition comprising a ground calcium carbonate, obtained or obtainable from the method according to any one of numbered paragraphs 1 to 30.

38. A paper coating composition according to numbered paragraph 37 which is in the form of an aqueous or non-aqueous slurry.

39. A paper coating composition according to numbered paragraph 37 which is in the form of a dry residue.

40. A paper coating composition according to any one of numbered paragraphs 37 to 39, wherein the coating composition is a pre-coating composition.

41. Paper or a paper product coated with the paper coating composition of any one of numbered paragraphs 37 to 40.

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

**Claims**

1. A method of preparing an aqueous slurry comprising calcium carbonate, the method comprising:

   providing a recovered calcium carbonate;
   dispersing the recovered calcium carbonate in water to form a slurry;
   grinding the slurry of recovered calcium carbonate to obtain a ground calcium carbonate;
   reducing the pH of the slurry of the ground calcium carbonate;
   screening the slurry of ground calcium carbonate.

2. The method according to claim 1, wherein the recovered calcium carbonate is a by-product of a process of producing pulp, for example, the Kraft pulping process.

3. The method according to claim 1 or claim 2, wherein the recovered calcium carbonate has a pH of 10.0 to 13.5, for example, 10.5 to 12.2.

4. The method according to any one of claims 1 to 3, wherein the recovered calcium carbonate has 15 wt% or less of particles having a particle size of $2\mu m$ or less, or 10 wt% or less of particles having a particle size of $2\mu m$ or less, and/or 30 wt% or greater of particles having a particle size of $10\mu m$ or greater, for example 55 wt% or greater of particles having a particle size of $10\mu m$ or greater.

5. The method according to any one of claims 1 to 4 wherein the recovered calcium carbonate has an ISO brightness of 35 to less than 96, or less than 90, or less than 80, or less than 70.

6. The method according to any one of claims 1 to 5, wherein dispersing the slurry further comprises utilising a dispersant, wherein the dispersant optionally comprises one or more of a polyacrylate, for example one or more of an ammonium polyacrylate, lithium polyacrylate, sodium polyacrylate, magnesium polyacrylate, calcium polyacrylate, or potassium polyacrylate, further wherein optionally the dispersant may be at least 30% neutralised, or at least 50% neutralised, or at least 55% neutralised, or at least 75% neutralised, or 100% neutralised.

7. The method according to any one of claims 1 to 6, wherein the ground calcium carbonate slurry comprises at least 50 wt% of particles having a particle size of $2\mu m$ or less, or at least 55 wt% of particles having a particle size of $2\mu m$ or less.

8. The method according to any one of claims 1 to 7, wherein the ground calcium carbonate slurry comprises less than 5 wt% of particles having a particle size of 10μm or greater, or less than 2 wt% of particles having a particle size of 10μm or greater.

9. The method according to any one of claims 1 to 8, wherein (i) the pH of the slurry after grinding is 11.0 to 13.5, for example 11.5 to 13.5; and/or (ii) wherein the pH reduction reduces the pH of the slurry to 8.0 to 11.2, for example 9.0 to 11.2, or 9.5 to 11.2, or 9.4 to 9.9.

10. The method according to any one of claims 1 to 9, wherein the pH of the ground calcium carbonate slurry is reduced by a treatment comprising or consisting of one or more acids, e.g. one or more of hydrochloric acid, nitric acid, phosphoric acid, sulfuric acid, or carbon dioxide.

11. The method according to any one of claims 1 to 10, wherein the screening comprises or consists of sieving or centrifugation.

12. The method according to any one of claims 1 to 11, wherein the screened ground calcium carbonate has an ISO brightness of 65 or greater, for example 70 or greater, for example 75 or greater, for example 80 or greater, for example 85 or greater, for example 90 or greater, for example 95 or greater.

13. The method according to any one of claims 1 to 12, further comprising:

   mixing or blending the slurry with a further slurry, wherein the further slurry comprises an inorganic particulate material,
   wherein optionally the inorganic particulate material comprises or consists of one or more of (natural) ground calcium carbonate (GCC), chalk, marble, kaolin, talc or precipitated calcium carbonate (PCC).

14. The method according to any one of claims 1 to 13, further comprising:

   drying the ground calcium carbonate slurry to obtain a final product comprising, or consisting of, or consisting essentially of ground calcium carbonate; optionally further comprising incorporating the final product comprising, or consisting of, or consisting essentially of ground calcium carbonate in a paper coating composition or as a filler in a paper making composition or a paper product.

15. (A) Paper or a paper product, comprising (i) a ground calcium carbonate obtained or obtainable from the method according to any one of claims 1 to 14; or (ii) a filler composition for paper, or for a paper product, or for a paper making composition comprising a ground calcium carbonate, obtained or obtainable from the method according to any one of claims 1 to 14; or
   (B) A paper coating composition comprising a ground calcium carbonate, obtained or obtainable from the method according to any one of claims 1 to 14, which may be in the form of an aqueous or non-aqueous slurry, or in the form of a dry residue.

Europäisches
Patentamt

European
Patent Office

Office européen
des brevets

# EUROPEAN SEARCH REPORT

**Application Number**

**EP 21 30 5943**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 5 006999 B2 (OKUTAMA KOGYO CO LTD) 22 August 2012 (2012-08-22) * page 5 - page 6; tables 1-4 * ----- | 1-15 | INV. C01F11/18 |
| X | CN 106 948 215 A (UNIV EAST CHINA SCIENCE & TECH) 14 July 2017 (2017-07-14) | 1,6,15 | |
| Y | * Embodiments 1 to 5, Application Example * ----- | 1-15 | |
| Y | CN 107 724 171 A (GUANGXI HUAYANG MINERAL SOURCE MAT CO LTD) 23 February 2018 (2018-02-23) * examples 1-5 * ----- | 1-15 | |

**TECHNICAL FIELDS SEARCHED (IPC)**

C01F

The present search report has been drawn up for all claims

| Place of search | Date of completion of the search | Examiner |
|---|---|---|
| Munich | 24 January 2022 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                  
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 5943

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2022

| Patent document cited in search report | | Publication date | Patent family member(s) | | Publication date |
|---|---|---|---|---|---|
| JP 5006999 | B2 | 22-08-2012 | JP | 5006999 B2 | 22-08-2012 |
| | | | JP | 2001199722 A | 24-07-2001 |
| CN 106948215 | A | 14-07-2017 | NONE | | |
| CN 107724171 | A | 23-02-2018 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 614948 A